# EUROPÄISCHE PATENTANMELDUNG

(11) **EP 2 939 779 A1**
(43) Veröffentlichungstag der Anmeldung: **04.11.2015**
(21) Anmeldenummer: 14166634.7
(22) Anmeldetag: 30.04.2014
(51) Int. Cl.: B23D 61/12

(54) **Bimetallsäge**

(71) Anmelder: Böhler-Uddeholm Precision Strip GmbH, 3333 Böhlerwerk (AT)
(72) Erfinder: Leeb, Bernhard, A-3352 St. Peter in der Au (AT)
(74) Vertreter: Reitstötter Kinzebach

(57) **Zusammenfassung**

Die Erfindung betrifft eine Bimetallsäge mit einem Sägeblatt (10), das ein Trägerteil (11) aus wenigstens einem bruchfesten Trägermaterial und ein mit dem Trägerteil (11) entlang einer Schweißverbindung (13) verschweißtes Schneidteil (12) aus wenigstens einem verschleißfesten Schneidmaterial umfasst, wobei Zähne (14,15,16,17,18,19) mit einer zwischen Zahnspitze (20) und Zahngrund (21) gemessen Zahnhöhe (Z) in das Schneidteil (12) der Bimetallsäge eingebracht sind. Die erfindungsgemäße Bimetallsäge ist dadurch gekennzeichnet, dass die Höhe (H) des Schneidteils (12) so gewählt ist, dass noch ein wesentlicher Anteil des Schneidteils (12) zwischen dem Zahngrund (21) der Zähne (14,15,16,17,18,19) und der Schweißverbindung (13) vorhanden ist, und dadurch dass die Materialien des Trägerteils (11) und des Schneidteils (12) und deren geometrischen Anteile so abgestimmt sind, dass das Sägeblatt (10) nach abschließendem Härten und Anlassen im Wesentlichen verzugsfrei ist.

## Beschreibung

Die vorliegende Erfindung betrifft eine Bimetallsäge, insbesondere eine Handsäge aus Bimetall, mit einem Sägeblatt, das ein Trägerteil aus einem bruchsicheren Trägermaterial und ein mit dem Trägerteil verschweißtes Schneidteil aus einem verschleißfesten Schneidmaterial umfasst.

Eine Säge ist ein zerspanendes Werkzeug, das im Wesentlichen so arbeitet, dass das Sägeblatt mit seinen Zähnen in ein festes Werkstück eindringt und durch das Abtragen dünner Späne eine Trennnut in das Werkstück einbringt.

Sägeblätter, insbesondere Sägeblätter für Handsägen, wurden früher aus Kohlenstoffstahl hergestellt. Diese waren relativ weich und flexibel. Sie vermieden Bruch, waren aber auch sehr schnell abgenützt. Diese Art der Sägen ist mittlerweile veraltet. Seit mehreren Jahrzehnten sind daher Sägeblätter aus Schnellarbeitsstahl (HSS) in Verwendung. Diese Sägeblätter haben eine gute Standzeit und einen exakten Schnitt, sind aber auch sehr spröde und können bei hoher Belastung brechen und es besteht speziell bei Handsägen ein hohes Verletzungsrisiko.

Da Sägeblätter auf Grund der unterschiedlichen Beanspruchungen im praktischen Einsatz einerseits hohe Biege-, Zug- und Schubspannungen im Trägerteil aufnehmen müssen und andererseits eine hohe Formbeständigkeit der Schneidkanten bzw. eine hohe Abriebfestigkeit und Verschleißfestigkeit der Zahnspitzen aufweisen müssen, werden seit Jahren auch Sägeblätter verwendet, bei denen das Trägerteil aus einem biegefesten Trägermaterial und das Schneidteil aus einem verschleißfesten Schneidmaterial besteht. Zur Herstellung eines derartigen Sägeblattes werden ein bandförmiges Trägerteil und mindestens ein drahtförmiges Schneidteil miteinander verbunden, beispielsweise durch Laser- oder Elektronenstrahlschweißen. Ein derartiges Sägeblatt besteht aus zumindest zwei unterschiedlichen Metallen bzw. Metalllegierungen. Im häufigsten Fall, wenn genau zwei unterschiedliche Metalle bzw. Metalllegierungen verwendet werden, spricht man von einer "Bimetallsäge". Im Folgenden soll der Begriff "Bimetallsäge" aber in einem erweiterten Sinne verstanden und nur der prinzipielle Aufbau aus einem Trägerteil und einem Schneidteil aus zumindest zwei unterschiedlichen Materialien umschrieben werden.

Der Vorteil dieser Blätter ist die Kombination des bruchsicheren Trägerteiles mit der hohen Schneidhaltigkeit der Zähne. Als Schneidmaterial wird vorzugsweise Schnellarbeitsstahl (HSS) eingesetzt. Der HSS-Anteil wird dabei beabsichtigterweise klein gehalten, da diese Komponente einen entscheidenden Kostenfaktor bei der Herstellung der Bimetallsäge darstellt. Üblicherweise findet man daher an einem Bimetallsägeblatt für Handsägen einen HSS-Anteil mit einer Höhe, die nur wenig höher als die Zahnhöhe ist. Typischerweise hat der Schneidenteil aus HSS einer Handsäge eine Höhe von etwa 1 mm bis maximal 1,3 mm.

Nach dem Verschweißen des HSS-Drahts mit dem Trägerteil muss der Bereich der Schweißnaht geglüht werden, damit dieser in weiterer Folge den unterschiedlichsten Bearbeitungsschritten standhält, insbesondere ein abschließendes Wellen bzw. Schränken des Verzahnungsbereiches. Um nämlich ein Festklemmen des Sägeblattes im Werkstück zu verhindern, muss die durch die Zähne eingearbeitete Trennnut breiter als das Sägeblatt sein. Dies kann beispielsweise dadurch erreicht werden, dass man die Zähne schränkt oder auswellt. Beim Schränken werden die Zähne des Schneidteils abwechselnd nach rechts und links ausgebogen. Beim Auswellen erfolgt das Ausbiegen der Zähne nach rechts und links jeweils über einen größeren Abschnitt, der mehrere Zähne umfasst. In beiden Fällen wird gewährleistet, dass der resultierende Sägeschnitt breiter als das Sägeblatt, genauer gesagt breiter als der nicht geschränkte oder ausgewellte Trägerteil des Sägeblattes ist.

Aufgrund der bei Benutzung der Säge auftretenden Belastungen werden auch an die Güte der Schweißverbindung zwischen Schneidteil und Trägerteil hohe Anforderungen gestellt. Die Schweißverbindung muss eine ausreichend hohe Zähigkeit und Biegewechselfestigkeit aufweisen und darf nur eine geringe Rissbildungsneigung zeigen, damit Zahnausbrüche zuverlässig vermieden werden. Diese Anforderungen schränken die Wahl der Kombinationen von Schneid- und Trägermaterialien ein und erfordern zudem eine aufwändige Nachbearbeitung der Schweißverbindung.

Bei der Weiterverarbeitung zur Säge wird das Sägeblatt gehärtet, beispielsweise durch Umwandlungshärtung, wobei das Band soweit erwärmt wird, dass sich der bei Raumtemperatur vorliegende Ferrit in Austenit umwandelt. Nach dem Abschrecken von der Austenit-Umwandlungstemperatur auf Raumtemperatur oder nahezu Raumtemperatur wird das Sägeblatt in einer oder mehreren Wärmebehandlungen angelassen, um den durch das Härten entstandenen Verspannungszustand im Sägeblatt abzubauen und so dem Sägeblatt eine definiert höhere Flexibilität zu geben.

Die unterschiedlichen Materialien im Schneiden- und Trägerteil des Sägeblatts zeigen jedoch ein unterschiedliches Umwandlungsverhalten bei der oben beschriebenen Wärmebehandlung. Die daraus resultierende unterschiedliche Längenänderung von Schneidenteil und Trägerteil führt dann zu einer Hochkantkrümmung der Bimetallsäge, die auch als Säbeligkeit (engl.: "camber") bezeichnet wird. Da die Schneidkante des Sägeblattes einer Handsäge aber eine hohe Geradlinigkeit aufweisen muss, muss auch aus diesem Grund die Höhe des Schneidteils so gering wie möglich gehalten werden, damit auch die Säbeligkeit des Sägeblattes innerhalb engster Toleranzen bleibt.

Der Erfindung liegt daher das technische Problem zu Grunde, eine verbesserte Bimetallsäge, insbesondere eine Handsäge, bereitzustellen, welche bei geringer Säbeligkeit eine erhöhte Stabilität gegenüber Zahnausbrüchen gewährleistet.

Gelöst wird dieses technische Problem durch Bereitstellung einer Bimetallsäge mit den Merkmalen des vorliegenden Patentanspruchs 1. Vorteilhafte Weiterbildungen der erfindungsgemäßen Bimetallsäge sind Gegenstände der abhängigen Patentansprüche.

Die Erfindung betrifft demnach eine Bimetallsäge mit einem Sägeblatt, das ein Trägerteil aus wenigstens einem bruchfesten Trägermaterial und ein mit dem Trägerteil entlang einer Schweißverbindung verschweißtes Schneidteil aus wenigstens einem verschleißfesten Schneidmaterial umfasst, wobei Zähne mit einer bestimmten, zwischen Zahnspitze und Zahngrund gemessen, Zahnhöhe in das Schneidteil des Sägeblattes eingebracht sind. Die erfindungsgemäße Bimetallsäge ist dadurch gekennzeichnet, dass die Höhe des Schneidteils so gewählt ist, dass noch ein wesentlicher Anteil des Schneidteils zwischen dem Zahngrund der Zähne und der Schweißverbindung vorhanden ist, und dadurch dass die Materialien des Trägerteils und des Schneidteils und deren geometrischen Anteile so abgestimmt sind, dass das Sägeblatt nach abschließendem Härten und Anlassen im Wesentlichen verzugsfrei ist. Es versteht sich dabei, dass Trägermaterial und Schneidmaterial im Sinne der vorliegenden Erfindung unterschiedliche Materialien sind.

Der vorliegenden Erfindung liegt die Überlegung zu Grunde, im Gegensatz zu dem im Stand der Technik herrschenden Trend hin zu immer geringeren Anteilen an Schneidmaterial im Sägeblatt, den Anteil des Schneidmaterials im Sägeblatt soweit zu erhöhen, dass nach Einbringen der Zähne in den Schneidteil noch ein wesentlicher Anteil des Schneidteils zwischen dem Zahngrund der Zähne und der Schweißverbindung stehen bleibt, damit die bei Benutzung der Bimetallsäge auf die Schweißverbindung wirkenden Belastungen soweit reduziert werden, dass Zahnausbrüche wirksam vermieden werden können. Der dazu erforderliche "wesentliche Anteil" im Sinne der vorliegenden Erfindung hängt vom Einsatzzweck der Bimetallsäge und den entsprechend gewählten Zahnhöhen ab. Da die Gesamthöhe der handelsüblichen Bimetallsägen meist standardisiert ist, nimmt mit der größeren Höhe des Schneidteils die Höhe des Trägerteils entsprechend ab, so dass sich insgesamt auch die geometrischen Anteile von Schneid- und Trägermaterial ändern.

Vorzugsweise ist die erfindungsgemäße Bimetallsäge eine Handsäge, speziell eine Handsäge mit einem geradlinigen, beidseitig eingespannten Sägeblatt, wie beispielsweise eine Bügelsäge. Zum beidseitigen Einspannen des Sägeblattes weist ein handelsübliches Sägeblatt an seinen beiden Enden jeweils ein Loch auf, wobei der Abstand der Löcher voneinander 250mm bzw. 300mm beträgt. Bei einer solchen Handsäge weist das Schneidteil vorzugsweise eine Höhe von mehr als 1,4 mm auf, damit die auf die Schweißverbindung wirkenden Belastung soweit reduziert werden kann, dass die Gefahr von Zahnausbrüchen minimiert wird. Die Höhe des Schneidteils wird dabei von der Mitte der Schweißverbindung (Schweißnaht) zwischen Schneidteil und Trägerteil bis zur Spitze der in das Schneidteil eingebrachten Zähne gemessen.

Im Fall einer Handsäge weisen die in das Schneidteil eingebrachten Zähne vorzugsweise eine zwischen Zahngrund und Zahnspitze gemessene Zahnhöhe im Bereich von 0,3 - 1,0 mm auf. In diesem Fall kann die Höhe des Schneidteils bevorzugt bis zu 3,5 mm betragen. In Abhängigkeit von der verwendeten Zahnhöhe kann die Resthöhe des zwischen der Mitte der Schweißverbindung und dem Zahngrund verbleibenden Schneidteils rechnerisch somit im Bereich von 0,4 mm und 3,2 mm liegen. Vorzugsweise wählt man mit zunehmender Zahnhöhe auch eine größere Höhe des Schneidteils. Besonders bevorzugt ist die Resthöhe des verbleibenden Schneidmaterials wesentlich größer als die Höhe der in das Schneidteil eingebrachten Zähne.

Mit der erfindungsgemäß vorgeschlagen Verwendung eines höheren Schneidteils ist aber auch die Gefahr einer erhöhten Säbeligkeit des vergüteten Sägeblattes verbunden. Überraschend wurde aber gefunden, dass durch geeignete Wahl der Träger- und Schneidmaterialien und deren geometrischen Anteile ein Sägeblatt bereitgestellt werden kann, bei dem die durch Umwandlungshärten und Anlassen resultierenden Längenänderungen von Trägerteil und Schneidteil im Wesentlichen gleich sind, so dass die spätere Schneidkante des Sägeblatts im wesentlichen verzugsfrei und geradlinig ist.

Unter einem im Wesentlichen verzugsfreien Sägeblatt soll im Rahmen der vorliegenden Erfindung ein Sägeblatt verstanden werden, dessen Hochkantkrümmung bzw. Säbeligkeit, bezogen auf die Länge des Sägeblatts einer handelsüblichen Handsäge, geringer als 1 mm, vorzugsweise geringer als 0,5 mm ist. Unter der Länge des Sägeblatts einer handelsüblichen Handsäge versteht man dabei die Länge eines Sägeblattes für eine Bügelsäge mit einem Lochabstand von ca. 300 mm. Durch die erfindungsgemäße Auswahl der Träger- und Scheidenmaterialien ist es möglich, diese geringe Säbeligkeit auch dann einzuhalten, wenn das Schneidmaterial mit einen größeren Anteil als bei Sägeblättern des Standes der Technik verwendet wird, also insbesondere, wenn das Schneidteil eine Höhe von mehr als 1,4 mm, bevorzugt eine Höhe im Bereich zwischen 1,4 und bis zu 3,5 mm aufweist.

Das Trägerteil des Sägeblattes der erfindungsgemäßen Bimetallsäge besteht vorzugsweise aus Kohlenstoffstahl oder einem niedriglegierten Stahl. Das Schneidteil besteht bevorzugt aus einem Schnellarbeitsstahl.

Ein besonders geringe Säbeligkeit wird erreicht wenn ein Trägermaterial mit folgender Zusammensetzung verwendet wird (Angaben in Gew.%):

| | |
|---|---|
| Kohlenstoff (C) | 0,7 bis 1,3 |
| Silicium (Si) | bis 2 |
| Mangan (Mn) | bis 2 |
| Chrom (Cr) | bis 2 |
| Molybdän (Mo) | bis 1 |
| Nickel (Ni) | bis 1 |
| Vanadium (V) | bis 0,5 |
| Wolfram (W) | bis 2 |

Eisen (Fe) und erschmelzungsbedingte Begleitelemente und Verunreinigungen als Rest.;
und dieses Trägermaterial mit einem Schneidmaterial mit folgender Zusammensetzung kombiniert wird (Angaben in Gew.%):

| | |
|---|---|
| Kohlenstoff (C) | 0,7 bis 1,3 |
| Silicium (Si) | bis 0,8 |
| Mangan (Mn) | bis 0,8 |
| Chrom (Cr) | 2 bis 4,5 |
| Molybdän (Mo) | bis 6 |
| Vanadium (V) | bis 3 |
| Wolfram (W) | bis 7 |
| Cobalt (Co) | bis 8 |

Eisen (Fe) und erschmelzungsbedingte Begleitelemente und Verunreinigungen als Rest,
wobei der Anteil der Elemente V+Mo+W/2 > 5 Gew.% beträgt.

Vorzugsweise sind die Zähne ausgewellt, damit ein Schnitt erzeugt werden kann, der breiter als die Breite des Sägeblattes im Bereich des Trägerteils ist. Erfindungsgemäß wurde nun gefunden, dass die Höhe des Schneidteils ohne nachteilige Auswirkung auf die Säbeligkeit vergrößert werden kann. Daher kann insbesondere die Höhe des zwischen Zahngrund der Zähne und dem Trägerteil verbleibenden Schneidmaterials so gewählt werden, dass die durch die Auswellung der Zähne hervorgerufene Auslenkung aus der Mittelebene des Sägeblatts nahezu vollständig in dem Schneidteil verläuft.

Die Erfindung schlägt also vor, im Gegensatz zu dem bisher herrschenden Trend eine Bimetallsäge mit einem größeren Anteil an Schneidmaterial zu verwenden, als für die Ausbildung der Zähne erforderlich ist.

Im Rahmen der vorliegenden Erfindung wird die Auslenkung der Zähne auf die Mittelebene des Sägeblattes bezogen, d. h. auf eine in der Draufsicht auf die Schneidkante des Sägeblattes in Längsrichtung des Sägeblattes verlaufende Mittelebene.

Unter einer nahezu vollständig im Schneidenteil verlaufenden Auslenkung des Sägeblattes aus dieser Mittelebene ist zu verstehen, dass die Auslenkung aus der Mittelebene im Verbindungsbereich zwischen Schneidteil und Trägerteil, d. h. auf Höhe der Schweißverbindung, abhängig von der Zahnhöhe, weniger als 30 % der Maximalauslenkung des jeweiligen Zahns, gemessen an der Zahnspitze, betragen kann. Besonders bevorzugt beträgt die durch Auswellung der Zähne hervorgerufene Auslenkung aus der Mittelebene des Sägeblattes im Verbindungsbereich zwischen Schneidteil und Trägermaterial weniger als 10 % der Maximalauslenkung des jeweiligen Zahns, und insbesondere weniger als 5 % der Maximalauslenkung des jeweiligen Zahns.

Die vorliegende Erfindung wird im Folgenden anhand eines in den beigefügten Zeichnungen dargestellten Ausführungsbeispiels näher erläutert.

In den Zeichnungen zeigt:
- Fig. 1: eine schematische Draufsicht auf ein Sägeblatt einer erfindungsgemäßen Bimetallsäge;
- Fig. 2: eine Stirnansicht des Sägeblattes der Fig. 1;
- Fig. 3: eine schematische Seitenansicht des Sägeblattes der Fig. 1;
- Fig. 4: eine Dilatometerkurve einer HSS-Probe;
- Fig. 5: eine Dilatometerkurve eines Standardträgermaterials;
- Fig. 6: eine Dilatometerkurve einer ersten Trägermaterialvariante;
- Fig. 7: eine Dilatometerkurve einer zweiten Trägermaterialvariante; und
- Fig. 8: eine Darstellung der Säbeligkeit unterschiedlicher Handsägen.

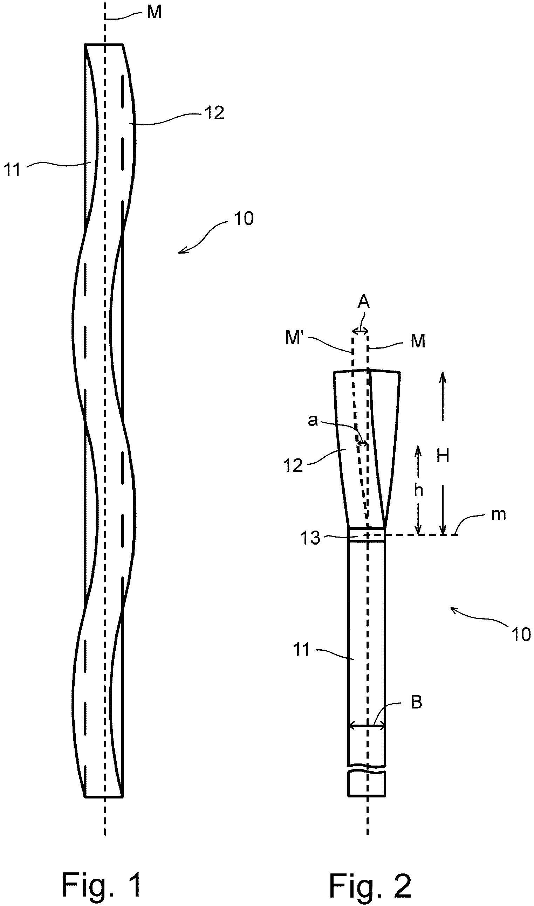

Die Fig. 1 und 2 zeigen eine Draufsicht bzw. eine Stirnansicht auf ein insgesamt mit der Bezugsziffer 10 bezeichnetes Sägeblatt einer erfindungsgemäßen Bimetallsäge. Das Sägeblatt 10 besteht aus einem Trägerteil 11 aus Werkzeugstahl und einem Schneidteil 12 aus Schnellarbeitsstahl. Das Trägerteil 11 und das Schneidteil 12 sind über eine Schweißverbindung 13 miteinander verbunden. In das Schneidteil 12 werden Zähne eingefräst, die jedoch in der schematischen Zeichnung der Figuren 1 und 2 nicht dargestellt sind.

Damit bei Benutzung des Sägeblatts 10 ein Schnitt erzeugt wird, der breiter als die Breite B des Trägerteils 11 des Sägeblattes 10 ist, können die Zähne des Schneidteils durch Auswellen gegenüber dem Trägerteil nach links und rechts ausgelenkt werden. Im dargestellten Beispiel wurden die nicht dargestellten und nur durch das Schneidteil 12 selbst angedeuteten Zähne durch Auswellen gegenüber der Mittelebene des Sägeblatts nach links und nach rechts ausgelenkt. In den Fig. 1 und 2 symbolisiert eine mit dem Bezugszeichen M bezeichnete, gestrichelte Linie diese Mittelebene des Sägeblattes 10, genauer gesagt die Mittelebene M des Sägeblattes in einem nicht ausgelenkten Bereich des Trägerteils 11. Im Schneidteil 12 verursacht die Auswellung der Zähne eine Auslenkung der Mittelebene nach links oder nach rechts. Beispielhaft ist in Fig. 2 die nach links ausgelenkte Mittelebene durch eine mit dem Bezugszeichne M' bezeichnete gestrichelte Linie dargestellt. Wie man der Fig. 2 entnehmen kann nimmt die Auslenkung a der Mittelebene M' entlang der Höhe h des Schneidteils zur Oberkante des Schneidteils 12 immer mehr zu und erreicht an der Oberkante des Schneidteils 12 die maximale Auslenkung A.

Die Höhe H des Schneidteils ist so gewählt, dass die durch die Auswellung der Zähne hervorgerufene Auslenkung aus der Mittelebene des Sägeblattes nahezu vollständig im Schneidbereich und praktisch nicht mehr im Verbindungsbereich 13 zwischen Trägerteil 11 und Schneidteil 12 verläuft. Die Höhe H des Schneidteils wird dabei als Abstand zwischen einer durch die Schweißverbindung 13 verlaufenden Mittellinie m und der Oberkante des Schneidteils 12 bestimmt.

Erfindungsgemäß ist insbesondere vorgesehen, dass die durch die Auswellung der Zähne hervorgerufene Auslenkung a aus der Mittelebene des Sägeblattes im Verbindungsbereich 13 zwischen dem Schneidteil 12 und dem Trägermaterial 11 weniger als 30 %, vorzugsweise weniger als 10 % und besonders bevorzugt weniger als 5 % der Maximalauslenkung A des jeweiligen Zahns beträgt.

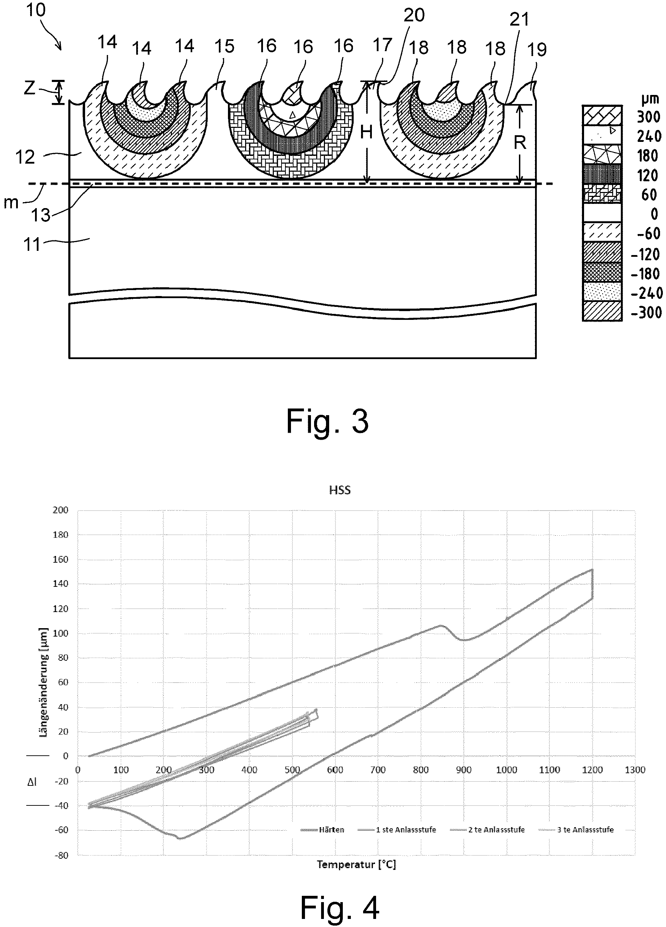

Die beispielhafte Seitenansicht der Fig. 3 macht dies noch etwas deutlicher. Man erkennt wiederum das erfindungsgemäße Sägeblatt 10 mit dem Trägerteil 11 und dem Schneidteil 12, wobei in dieser Ansicht die einzelnen, in das Schneidteil 12 eingebrachten Zähne 14, 15, 16, 17, 18, 19 dargestellt sind. Die Zeichenebene der Fig. 3 entspricht der Mittelebene M der Fig. 1 und 2, so dass die beispielhafte, banddickenneutrale Auslenkung der Zähne aus der Mittelebene durch entsprechende Schraffuren dargestellt ist. In Fig. 3 ist auch eine banddickenneutrale Legende dargestellt, mit der den Schraffuren konkrete Auslenkungen in Mikrometer zugeordnet sind. Dabei bezeichnen positive Werte eine Auslenkung aus der Zeichenebene nach vorn und negative Werte eine Auslenkung aus der Zeichenebene nach hinten. Wie man erkennt ist die Auswellung so durchgeführt, dass drei Zähne 14 nach hinten aus der Zeichenebene herausgebogen werden, gefolgt von einem im Wesentlichen ungebogenen Zahn 15, dem sich drei Zähne 16 anschließen, die mehr oder weniger stark nach vorn aus der Zeichenebene gebogen sind, wiederum gefolgt von einem im Wesentlichen ungebogenen Zahn 17, dem sich drei weitere nach hinten aus der Zeichenebene herausgebogene Zähne 18 anschließen, während der letzte dargestellte Zahn 19 im Wesentlichen wieder ungebogen ist. Wie man der Fig. 3 entnimmt, pflanzt sich die Auslenkung der Zähne ins Schneidmaterial 12 und weiter bis zu der Schweißverbindung 13 fort. Die Höhe H des Schneidmaterials 12 entspricht in dieser Darstellung wieder dem Abstand zwischen der Mittellinie m der Schweißverbindung 13 (d.h. dem Übergang vom Schneidteil 12 zum Trägerteil 11) und der Spitze 20 der in das Schneidmaterial eingebrachten Zähne. Wie man in Fig. 3 erkennt, ist diese Höhe H so gewählt, dass die nach Einbringen der Zähne verbleibende Resthöhe R des Schneidteils 12 zwischen Zahngrund 21 der eingebrachten Zähne und der Mittellinie m Schweißverbindung 13 ausreichend groß ist, damit im Bereich der Schweißverbindung keine nennenswerte Auslenkung aus der Mittelebene heraus mehr auftritt. Somit wird eine Belastung der Schweißverbindung 13 durch das Auswellen der Zähne vermieden.

Im Folgenden wird anhand von Vergleichsversuchen erläutert, wie ein Sägeblatt mit einer geeigneten Materialkombination von Schneidteil und Trägerteil für eine erfindungsgemäße Bimetallsäge gefunden werden kann.

Gesucht werden Materialkombinationen von Schneidteil und Trägerteil, die bei den Wärmebehandlungen, denen das Sägeblatt beim Härten und Anlassen unterzogen wird, ein möglichst ähnliches Längenänderungsverhalten zeigen.

Als geeignete Untersuchmethode erweist sich hierzu die Dilatometrie. Mittels eines Dilatometers kann man unter anderem die Längenänderung eines Festkörpers bei Temperaturänderung über die thermische Ausdehnung charakterisieren. Dazu wird in einem Dilatometer eine standardisierte Probe in ein Messsystem bekannter thermischer Ausdehnung eingespannt und in einem Ofen nach einer definierten Heizkurve geführt. Parallel dazu erfolgt eine Aufzeichnung der Längenänderung als Funktion der Temperatur. Die so erhaltenen Dilatometerkurven unterschiedlicher Materialien lassen sich direkt vergleichen.

Im vorliegenden Fall wurde zunächst ein für Handsägen üblicherweise verwendeter Schnellarbeitsstahl (HSS) ausgewählt und dieser mit verschiedenen Trägerbandqualitäten vergleichen.

Dazu wurde zunächst eine standardisierte Probe des HSS-Werkstoffs in einem Dilatometer einer definierten Heizkurve unterworfen, welche einem Härten gefolgt von einem dreimaligen Anlassen entspricht. Die entsprechende Dilatometerkurve ist in Fig. 4 dargestellt. Fig. 4 zeigt sehr anschaulich, dass aufgrund der durch die Wärmebehandlung induzierten Umbildungen in der Gefügestruktur des Materials bei Erreichen der Ausgangstemperatur eine bleibende Längenänderung (ΔI) der Probe resultiert.

Mit dem HSS-Werkstoff wurden drei unterschiedliche Trägerbandqualitäten verglichen, deren wesentliche Bestandteile in der folgenden Tabelle wiedergegen sind.

| **Bez.** | **C** | **Si** | **Mn** | **Cr** | **Mo** | **Ni** | **V** |
|---|---|---|---|---|---|---|---|
| **Standard** | 0,44-0,48 | bis 0,35 | 0,65-0,85 | 0,90-1,20 | 0,90-1,10 | 0,60-1,00 | 0,10-0,15 |
| **A** | 0,95-1,05 | bis 0,35 | bis 0,45 | 1,35-1,65 | | | |
| **B** | 1,1-1,3 | bis 0,35 | bis 0,45 | bis 0,60 | -- | -- | |

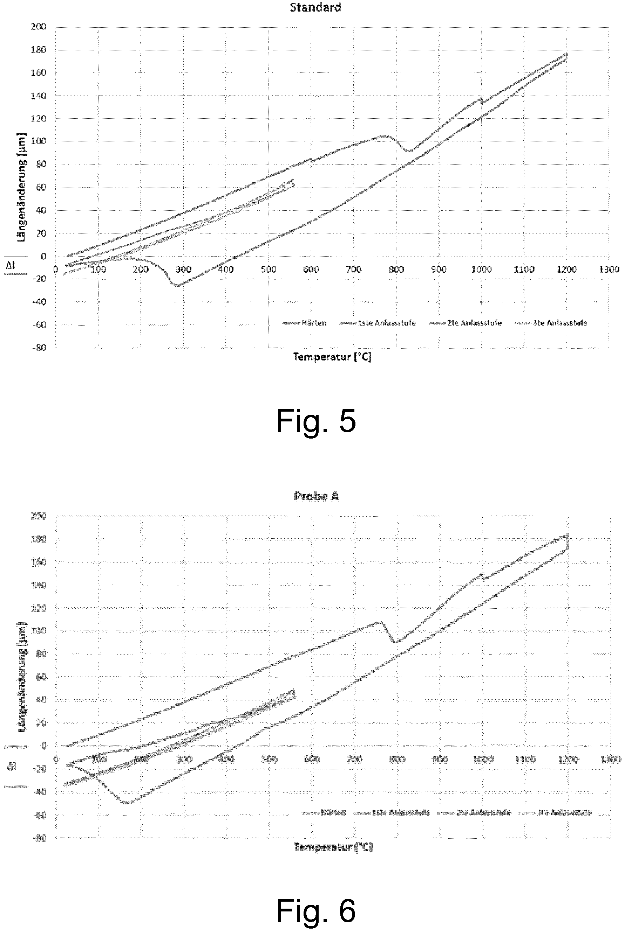

Das mit "Standard" bezeichnete Trägermaterial entspricht einem Trägermaterial, welches üblicherweise mit dem HSS-Material zur Herstellung von Bimetallhandsägen kombiniert wird. Die Materialien "A" und "B" sind Vergleichsmaterialien für alternative Trägerbänder. Entsprechend standardisierte Proben der drei Trägerbandmaterialien wurden ebenfalls in einem Dilatometer der gleichen Heizkurve wie das HSS-Material unterworfen. Die entsprechenden Ergebnisse sind in den Fig. 5 - 7 dargestellt.

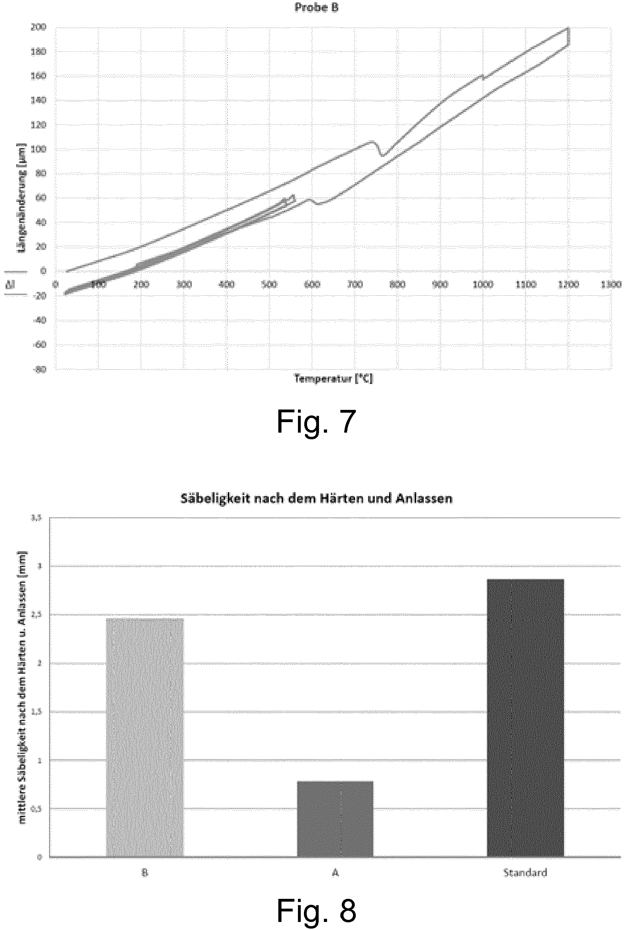

Man erkennt, dass die bleibende Längenänderung (ΔI) nach Durchlaufen der definierten Heizkurve für das Trägermaterial "Standard" (Fig. 5) erheblich von der bleibenden Längenänderung des Schneidmaterials "HSS" (Fig. 4) abweicht. Das Schneidmaterial "B" (Fig. 7) passt bereits geringfügig besser zu dem HSS-Werkstoff, aber die Dilatometerkurven zeigen immer noch einen erheblichen Unterschied in der bleibenden Längenänderung. Demgegenüber entspricht die bleibende Längenänderung (ΔI) des Trägermaterials "A" (Fig. 6) nahezu derjenigen des HSS-Materials.

Zur Herstellung von unterschiedlichen Sägeblättern wird das HSS-Material jeweils mit den verschiedenen Trägerbändern verschweißt und nach Einbringen der Zähne entsprechend wärmebehandelt. Aufgrund der unterschiedlichen, nach der Wärmebehandlung bleibenden Längenänderungen der Materialien im Bimetallsägeblatt kommt es zu Spannungen im Sägeblatt, welche zu einer Säbeligkeit des Sägeblatts führen.

Fig. 8 zeigt das Ergebnis von Säbeligkeitsuntersuchungen, die nach der Wärmebehandlung an Sägeblätter (300 mm Lochabstand) aus drei unterschiedlichen Materialkombinationen durchgeführt wurden. Dazu wurde HSS-Material mit definiert gleichem Schneidanteil H mit Trägerbändern aus "Standard"-Trägermaterial bzw. aus "A"- und "B"-Trägermaterial verschweißt. Die daraus hergestellten Bimetallsägen hatten dann noch Resthöhe R an Schneidmaterial von 1,5 mm und wurden gemäß der Heizkurven der Fig. 4 -7 gehärtet und angelassen. Die Ergebnisse der Säbeligkeitsmessungen zeigen, dass es statistisch gesehen, nach einer oben beschriebenen Wärmebehandlung einer Bimetallhandsäge mit einem Standardträgerteil zu einer wesentlich größeren Säbeligkeit nach der Wärmebehandlung kommt, als bei einer Bimetallsäge wo der Trägerteil aus dem Werkstoff A besteht.

## Patentansprüche

1. Bimetallsäge mit einem Sägeblatt (10), das ein Trägerteil (11) aus wenigstens einem bruchfesten Trägermaterial und ein mit dem Trägerteil (11) entlang einer Schweißverbindung (13) verschweißtes Schneidteil (12) aus wenigstens einem verschleißfesten Schneidmaterial umfasst, wobei Zähne (14,15,16,17,18,19) mit einer zwischen Zahnspitze (20) und Zahngrund (21) gemessen Zahnhöhe (Z) in das Schneidteil (12) des Sägeblattes eingebracht sind,
**dadurch gekennzeichnet,**
**dass** die Höhe (H) des Schneidteils (12) so gewählt ist, dass noch ein wesentlicher Anteil des Schneidteils (12) zwischen dem Zahngrund (21) der Zähne (14,15,16,17,18,19) und der Schweißverbindung (13) vorhanden ist,
und **dass** die Materialien des Trägerteils (11) und des Schneidteils (12) und deren geometrischen Anteile so abgestimmt sind, dass das Sägeblatt (10) nach abschließendem Härten und Anlassen im Wesentlichen verzugsfrei ist.

2. Bimetallsäge gemäß Anspruch 1, **dadurch gekennzeichnet, dass** die Bimetallsäge eine Handsäge ist, wobei ein Schneidteil (12) einer Höhe (H) von mehr als 1,4 mm aufweist.

3. Bimetallsäge gemäß Anspruch 2, **dadurch gekennzeichnet, dass** die in das Schneidteil (12) eingebrachten Zähne (14,15,16,17,18,19) eine Zahnhöhe (Z) von 0,3 - 1,0 mm aufweisen und Höhe (H) des Schneidteils (12) bis zu 3,5 mm beträgt.

4. Bimetallsäge gemäß einem der Ansprüche 1 bis 3, **dadurch gekennzeichnet, dass** das Sägeblatt (10) eine Säbeligkeit aufweist, die, bezogen auf eine Länge des Sägeblatts für eine handelsübliche Handsäge mit Lochabstand von etwa 300 mm, kleiner als 1 mm, vorzugsweise kleiner als 0,5 mm, ist.

5. Bimetallsäge gemäß einem der Ansprüche 1 - 4, **dadurch gekennzeichnet, dass** das Trägerteil (11) aus Kohlenstoffstahl oder einem niedriglegierten Stahl besteht.

6. Bimetallsäge gemäß Anspruch 5, **dadurch gekennzeichnet, dass** das Trägermaterial folgende Zusammensetzung aufweist (Angaben in Gew.%):
| | |
|---|---|
| Kohlenstoff (C) | 0,7 bis 1,3 |
| Silicium (Si) | bis 2 |
| Mangan (Mn) | bis 2 |
| Chrom (Cr) | bis 2 |
| Molybdän (Mo) | bis 1 |
| Nickel (Ni) | bis 1 |
| Vanadium (V) | bis 0,5 |
| Wolfram (W) | bis 2 |
Eisen (Fe) und erschmelzungsbedingte Begleitelemente und Verunreinigungen als Rest.

7. Bimetallsäge gemäß einem der Ansprüche 1 - 6, **dadurch gekennzeichnet, dass** das Schneidteil (12) aus einem Schnellarbeitsstahl besteht.

8. Bimetallsäge gemäß Anspruch 7, **dadurch gekennzeichnet, dass** das Schneidmaterial folgende Zusammensetzung aufweist (Angaben in Gew.%):
| | |
|---|---|
| Kohlenstoff (C) | 0,7 bis 1,3 |
| Silicium (Si) | bis 0,8 |
| Mangan (Mn) | bis 0,8 |
| Chrom (Cr) | 2 bis 4,5 |
| Molybdän (Mo) | bis 6 |
| Vanadium (V) | bis 3 |
| Wolfram (W) | bis 7 |
| Cobalt (Co) | bis 8 |
Eisen (Fe) und erschmelzungsbedingte Begleitelemente und Verunreinigungen als Rest,
wobei der Anteil der Elemente V+Mo+W/2 > 5 Gew.% beträgt.

9. Bimetallsäge gemäß einem der Ansprüche 1 bis 8, **dadurch gekennzeichnet, dass** die Zähne (14,15,16,17,18,19) ausgewellt sind, wobei die Resthöhe (R) des zwischen Zahngrund (21) und dem Trägerteil (11) verbleibenden Schneidmaterials so gewählt ist, dass die durch die Auswellung der Zähne (14,15,16,17,18,19) hervorgerufene Auslenkung aus der Mittelebene (M) des Sägeblatts (10) nahezu vollständig in dem Schneidteil (12) verläuft.
